# EUROPÄISCHE PATENTSCHRIFT

(11) **EP 2 531 387 B1**
(45) Veröffentlichungstag und Bekanntmachung des Hinweises auf die Patenterteilung: **16.09.2015**
(21) Anmeldenummer: 11702970.2
(22) Anmeldetag: 01.02.2011
(51) Int. Cl.: B60T 13/569, B60T 13/72

(54) **BREMSKRAFTVERSTÄRKER**
BRAKING FORCE AMPLIFIER
SERVOFREIN

(30) Priorität: 17.01.2011 DE 102011002765; 02.02.2010 DE 102010001510
(43) Veröffentlichungstag der Anmeldung: 12.12.2012
(73) Patentinhaber: Continental Teves AG & Co. oHG, 60488 Frankfurt (DE)
(72) Erfinder: BECKER, Stephan, 55576 Badenheim (DE); JAKOBI, Ralf, 65439 Flörsheim (DE); KLEY, Uwe, 60433 Frankfurt/M. (DE); KRÄMER, Horst, 65462 Ginsheim-Gustavsburg (DE); LOEW, Albin, 61884 Karben (DE); MAINZ, Sven, 65795 Eddersheim (DE); RÖSSLER, Thomas, 35287 Amöneburg (DE); WAGNER, Wilfried, 35625 Hüttenberg (DE)
(86) Internationale Anmeldenummer: PCT/EP2011/051399
(87) Internationale Veröffentlichungsnummer: WO 2011/095482

(56) Entgegenhaltungen:
- DE-A1- 3 411 027
- DE-A1- 10 333 983
- DE-A1-102008 037 048

## Beschreibung

Die Erfindung betrifft einen pneumatischen Bremskraftverstärker für Kraftfahrzeug mit einem Verstärkergehäuse, dessen Innenraum durch wenigstens eine, mit einem pneumatischen Differenzdruck beaufschlagbare, axial bewegliche Wand in wenigstens eine Arbeitskammer und wenigstens eine Unterdruckkammer unterteilt ist, mit einem, den Differenzdruck steuernden, in einem Steuergehäuse angeordneten Steuerventil zur Verbindung der Arbeitskammer mit der Unterdruckkammer oder der Atmosphäre, wobei die bewegliche Wand einen Membranteller und eine Rollmembran umfasst und wobei die Arbeitskammer mittels eines Dichtringes abgedichtet ist, welcher an dem Steuergehäuse anliegt und der in radialer Richtung bezogen auf eine Längsachse des Bremskraftverstärkers eingespannt ist.

Gattungsgemäße Bremskraftverstärker sind beispielsweise aus der DE 103 33 983 A1 und der DE 10 2008 037 048 A1 bekannt, wobei die DE 103 33 983 A1 einen konventionellen Bremskraftverstärkers und die DE 10 2008 037 048 A1 einen so genannten aktiven Bremskraftverstärker beschreibt, welcher auch unabhängig von einem Eingangsglied durch einen Elektromagneten betätigbar ist.

Aus DE 3411027 A1 ist ferner ein Bremskraftverstärker bekannt, bei dem ein das Steuerventilgehäuse umschließender Kragen eine Vielzahl von sich radial erstreckenden Noppen aufweist, auf denen ein Schaumstoffring verankert ist, welcher eine gleichmäßigere Verteilung der durchströmenden Luft sicherstellt.

Insbesondere bei modernen Fahrzeugen werden von der Automobilindustrie sehr hohe Anforderungen in Bezug auf den akustischen Komfort der Kraftfahrzeugkomponenten gestellt. Diese Forderungen sind mit den bekannten Bremskraftverstärkern zum Teil nicht zu erfüllen. Als eine Ursache für störende Geräuschemission hat sich in Versuchen die Bereitstellung eines hohen Vakuums herausgestellt. Dies tritt u.a. bei dem Einsatz von Vakuumpumpen auf, welche insbesondere in Fahrzeugen mit Elektro- bzw. Hybridantrieb notwendig sind, da vom Motor kein bzw. nicht genügend Vakuum bereitgestellt werden kann.

Das hohe Vakuum resultiert in Stick-Slip- sowie dynamische Effekte insbesondere am Dichtring zur Abdichtung der Arbeitskammer gegen die Atmosphäre, durch welche Störgeräusche entstehen.

Daher ist es Aufgabe der Erfindung, einen Bremskraftverstärker bereitzustellen, bei welchem die beschriebenen Nachteile vermieden werden können.

Die Aufgabe wird durch einen Bremskraftverstärker mit Mitteln nach dem Anspruch 1 gelöst. Unteransprüche und Figurenbeschreibungen geben weitere erfindungsgemäße Ausführungen und Weiterbildungen an.

Um eine komplette Rückstellung des Bremskraftverstärkers in eine Bereitschaftsstellung sicherzustellen, sind vorzugsweise die Mittel definiert undicht vorgesehen.

Die Mittel können in einfacher Weise ohne weitreichende Änderungen in den bekannten Aufbau eines Bremskraftverstärkers integriert werden, indem die Mittel vorzugsweise umlaufend an der Rollmembran oder dem Steuergehäuse angeordnet sind und indem die Mittel die Hauptkammer zu Beginn der Betätigung von der Vorkammer durch Anlage an dem Verstärkergehäuse bzw. einem Zwischenboden definiert undicht abtrennen.

Vorzugsweise ist als Mittel eine umlaufende Lippe an der Rollmembran angeformt, welche zu Beginn der Betätigung an dem Verstärkergehäuse bzw. dem Zwischenboden anliegt. Dabei kann die Lippe in einfacher Weise bereits bei der Herstellung der Rollmembran vorgesehen werden.

Um die Funktionalität des Bremskraftverstärkers nicht zu gefährden, ist gemäß einer vorteilhaften Weiterbildung auf der umlaufenden Lippe wenigstens eine Rippe vorgesehen, welche die definierte Undichtheit der Lippe gewährleistet. Eine Änderung des Verstärkergehäuses ist hierbei vorteilhafterweise nicht notwendig.

Eine alternative, vorteilhafte Ausführungsform der Erfindung sieht vor, dass die umlaufende Lippe wenigstens eine Ausnehmung aufweist, welche die definierte Undichtheit der Lippe gewährleistet, wobei auch hierbei keine Änderung des Verstärkergehäuses notwendig ist.

Als Mittel kann gemäß einer nicht erfindungsgemäßen Ausführungsform auch ein reversibel verformbares, umlaufendes Filterelement vorgesehen sein, welches die Hauptkammer zu Beginn der Betätigung gedrosselt belüftet.

Vorzugsweise ist im Anlagebereich des Mittels wenigstens ein Kanal vorgesehen, welcher die definierte Undichtheit des Mittels gewährleistet. Der Kanal kann je nach Anordnung des Mittels am Verstärkergehäuse oder an der beweglichen Wand vorgesehen sein.

Gemäß einer vorteilhaften Ausführungsform weist das Filterelement wenigstens einen Durchgangskanal auf, welcher die definierte Undichtheit des Filterelementes gewährleistet. Auch bei dieser Ausführungsform der Erfindung ist keine Änderung des Verstärkergehäuses notwendig.

Eine vorteilhafte Ausführungsform sieht vor, dass die Mittel im Bereich eines axialen Abschnittes des Verstärkergehäuses angeordnet sind, wodurch die Vorkammer zu Beginn der Betätigung klein ausgebildet sein kann.

Gemäß einer weiteren vorteilhaften Ausführungsform der Erfindung sind die Mittel im Bereich eines radialen Flansch-Abschnittes des Verstärkergehäuses angeordnet.

Sind die Mittel gemäß einer anderen vorteilhaften Ausführungsform im Bereich eines schrägen Abschnittes des Verstärkergehäuses angeordnet, kann der Bremskraftverstärker auch einen so genannten Zuganker aufweisen.

Weitere Merkmale, Vorteile und Anwendungsmöglichkeiten der Erfindung gehen aus der nachfolgenden Beschreibung von Ausführungsbeispielen sowie anhand der Zeichnung hervor.

Es zeigt jeweils im Längsschnitt:
- Figur 1: eine Teilansicht eines bekannten pneumatischen Bremskraftverstärkers;
- Figur 2: eine Teilansicht eines ersten Ausführungsbeispiels eines erfindungsgemäßen pneumatischen Bremskraftverstärkers;
- Figur 3: eine Teilansicht eines zweiten Ausführungsbeispiels eines erfindungsgemäßen pneumatischen Bremskraftverstärkers;
- Figur 4: eine vergrößerte Teilansicht des zweiten Ausführungsbeispiels gemäß Fig. 3;
- Figur 5: eine Teilansicht eines dritten Ausführungsbeispiels eines erfindungsgemäßen pneumatischen Bremskraftverstärkers und
- Figur 6: eine Teilansicht eines vierten Ausführungsbeispiels eines nicht erfindungsgemäßen pneumatischen Bremskraftverstärkers.

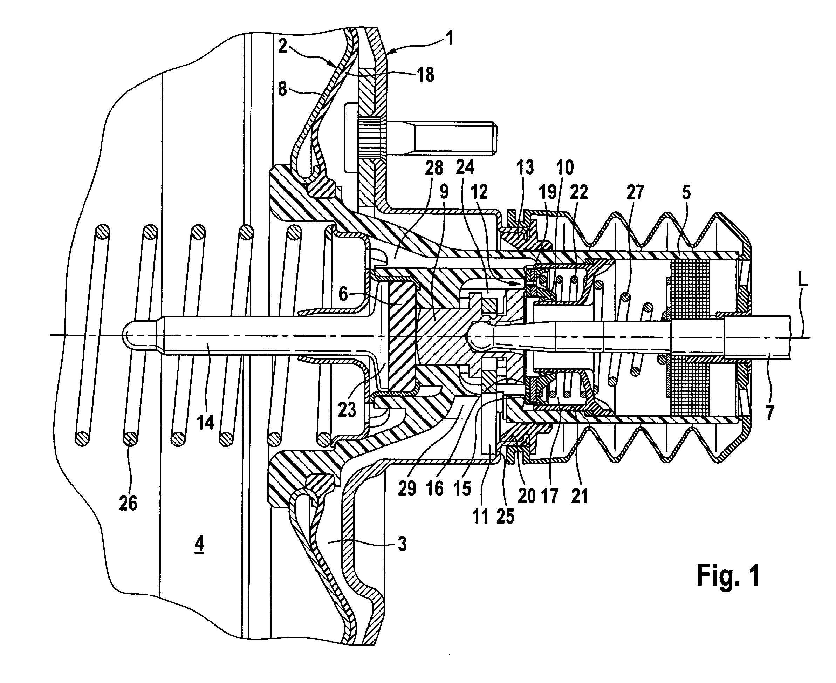

Das lediglich schematisch angedeutete Verstärkergehäuse 1 eines in Fig. 1 gezeigten bekannten Bremskraftverstärkers einer Kraftfahrzeugbremsanlage ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Rollmembran 18, die nicht näher dargestellt zwischen dem äußeren Umfang des Membrantellers 8 und dem Verstärkergehäuse 1 eine Rollmembran als Abdichtung bildet.

Ein durch ein Eingangsglied 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit dem Eingangsglied 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Führungsteil 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar. Das Eingangsglied 7 ist mit einem nicht dargestellten Bremspedal verbunden.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der am unterdruckseitigen Ende des Bremskraftverstärkers angebracht ist. Die an dem Eingangsglied 7 eingeleitete Eingangskraft wird auf die Reaktionsscheibe 6 mittels des Ventilkolbens 9 übertragen.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine Rückholfeder 27 vorgesehen, die zwischen dem Eingangsglied 7 und dem Führungsteil 21 angeordnet ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der gezeigten Lösestellung des Bremskraftverstärkers an einem am Verstärkergehäuse 1 ausgebildeten Anschlag 16 anliegt.

Zur Abdichtung der Arbeitskammer 3 gegenüber der Atmosphäre ist in einer zur Aufnahme des Steuergehäuses 5 vorgesehener Gehäuseöffnung 20 des Verstärkergehäuses 1 ein Dichtring 13 angeordnet, welcher an dem Steuergehäuse 5 anliegt und der in radialer Richtung bezogen auf eine Längsachse L des Bremskraftverstärkers eingespannt ist. Der Dichtring 13 gewährleistet die Abdichtung der Arbeitskammer 3 und ermöglicht gleichzeitig eine durch einen Pfeil angedeutete Hubbewegung des Steuergehäuses 5 bei einer Bremsbetätigung.

Im Steuergehäuse 5 ist ein pneumatischer Raum 17 begrenzt, welcher über Durchlässe 19 im Ventilkörper 22 den pneumatischen Raum 17 mit einem durch die Dichtsitze 15,16 begrenzten Ringraum 24 verbinden, in dem der oben erwähnte pneumatische Kanal 29 mündet, so dass der pneumatische Raum 17 ständig mit der Arbeitskammer 3 in Verbindung steht und am Ventilkörper 10 ein Druckausgleich stattfindet.

Die Funktionsweise und der grundsätzliche Aufbau der nachfolgend beschriebenen Ausführungsbeispiele der Erfindung unterscheiden sich nicht von der Funktionsweise und dem grundsätzlichen Aufbau des gemäß Fig. 1 beschriebenen bekannten Bremskraftverstärkers, so dass lediglich die für die Erfindung wesentlichen Teile im Folgenden dargestellt und beschrieben werden. Gleiche Bauteile sind dabei mit gleichen Bezugszeichen versehen und werden nachstehend nicht mehr beschrieben.

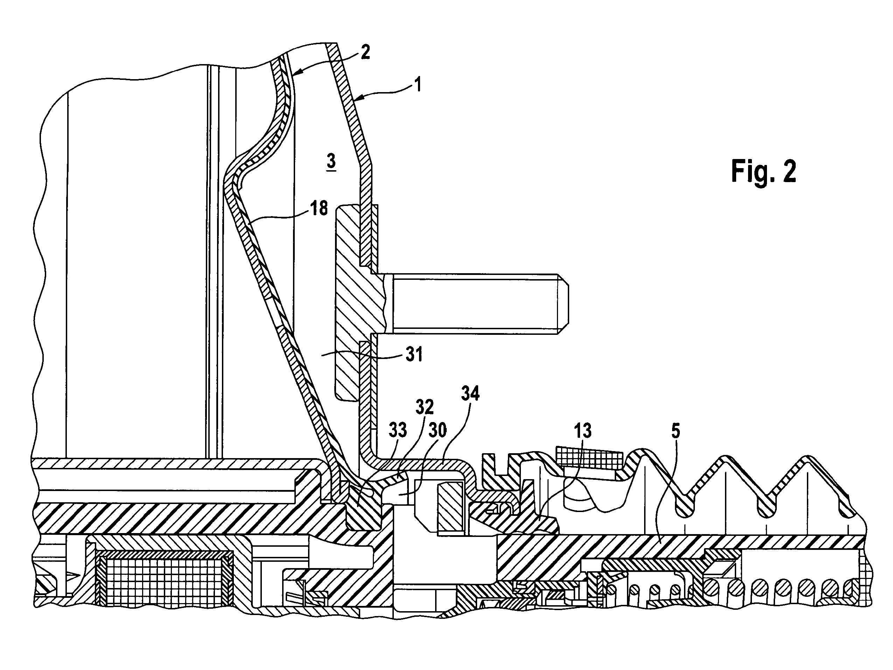

Den Fig. 2 bis 6 sind Ausschnitte von Ausführungsbeispielen eines erfindungsgemäßen Bremskraftverstärkers zu entnehmen, der als Single- oder Tandem-Gerät und als konventioneller oder als so genannter aktiver Bremskraftverstärker ausgeführt sein kann, welcher auch unabhängig von dem Eingangsglied 7 durch einen Elektromagneten betätigbar ist.

Insbesondere bei modernen Fahrzeugen werden von der Automobilindustrie sehr hohe Anforderungen in Bezug auf den akustischen Komfort der Kraftfahrzeugkomponenten gestellt. Bei dem gemäß Fig. 1 beschriebenen bekannten Bremskraftverstärker können diese Anforderungen nicht erfüllt werden, wenn - wie sich in Versuchen herausgestellt hat - ein hohes Vakuum dem Bremskraftverstärker zur Verfügung gestellt wird. Dies tritt u.a. bei dem Einsatz von Vakuumpumpen auf, welche insbesondere in Fahrzeugen mit Elektro- bzw. Hybridantrieb notwendig sind, da vom Motor kein bzw. nicht genügend Vakuum bereitgestellt werden kann.

Das hohe Vakuum resultiert in Stick-Slip- sowie dynamische Effekte insbesondere am Dichtring zur Abdichtung der Arbeitskammer, durch welche Störgeräusche entstehen.

Um diese Störgeräusche zu eliminieren, weisen alle nachfolgend beschriebenen Ausführungsbeispiele Mittel auf, um zu Beginn einer Betätigung des Bremskraftverstärkers eine wirksam beaufschlagte Fläche der beweglichen Wand 2,39 durch Unterteilung der Arbeitskammer 3,41 in eine Vorkammer 30,42 und eine Hauptkammer 31,43 zu verkleinern.

Durch die Verkleinerung der Arbeitskammer 3 zu Beginn der Betätigung entsteht durch die kleinere, wirksam beaufschlagte Fläche der beweglichen Wand 2,39 eine höhere Druckdifferenz, welche für ein Losreißen des Dichtringes 13,47 sorgt. Stick-Slip- sowie dynamische Effekte können damit vermieden werden und es kann ein sanftes Anlaufen des Bremskraftverstärkers bei der Betätigung realisiert werden.

Die Mittel sind dabei vorteilhafterweise definiert undicht vorgesehen, um eine komplette Rückstellung des Bremskraftverstärkers in eine Bereitschaftsstellung zu ermöglichen.

Den ersten drei Ausführungsbeispielen ist gemein, dass als Mittel eine umlaufende, an der Rollmembran 18 angeformte Lippe 32 vorgesehen ist, welche zu Beginn der Betätigung an dem Verstärkergehäuse 1 anliegt. Diese kann in einfacher Weise bereits bei der Herstellung der Rollmembran 18 vorgesehen und damit ohne weitreichende Änderungen in den bekannten Aufbau des Bremskraftverstärkers integriert werden.

Die Lippe 32 liegt in der in den Fig. 2 bis 5 gezeigten Bereitschaftsstellung des Bremskraftverstärkers an dem Verstärkergehäuse 1 an und trennt damit die Hauptkammer 31 zu Beginn der Betätigung von der Vorkammer 30 ab, so dass die Arbeitskammer 3 zu Beginn der Betätigung verkleinert wird. Durch die kleinere, wirksam beaufschlagte Fläche der beweglichen Wand 2 kann somit eine höhere Druckdifferenz ermöglicht werden, welche für ein Losreißen des Dichtringes 13 und damit für ein sanftes Anlaufen des Bremskraftverstärkers sorgt, wodurch Stick-Slip- sowie dynamische Effekte vermieden werden können.

Hat die bewegliche Wand 2 einen geringen, definierten Weg von beispielsweise ca. 1 mm zurückgelegt, hebt die Lippe 32 von dem Verstärkergehäuse 1 ab und es steht wieder das komplette Volumen der Arbeitskammer 3, d.h. Vorkammer 30 und Hauptkammer 31, zur Verfügung.

Die Lippe 32 des ersten Ausführungsbeispiels gemäß Fig. 2 ist direkt an einen in das Steuergehäuse 5 eingeknöpften Dichtwulst 33 angeformt und liegt zu Beginn der Betätigung an einem axialen Abschnitt 34 des Verstärkergehäuses 1 an. Hierdurch kann die Vorkammer 30 bei Betätigungsbeginn möglichst klein ausgebildet sein. Bei einer nicht gezeigten, alternativen Ausführungsform kann die Lippe 32 auch direkt an dem Steuergehäuse 5 angeordnet sein.

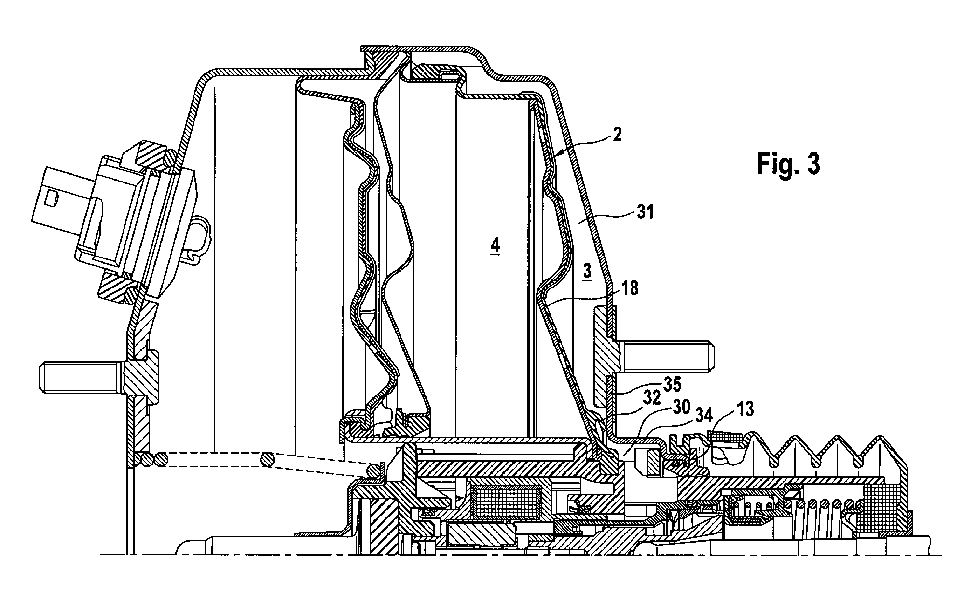

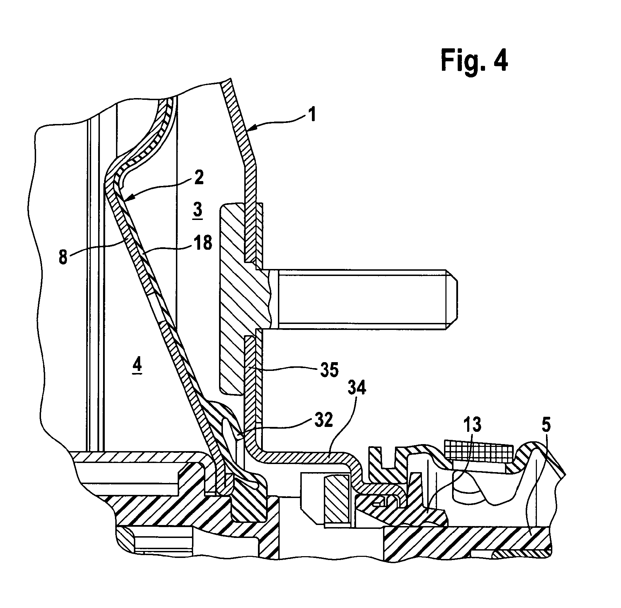

Den Fig. 3 und 4 ist jeweils ein Ausschnitt des zweiten Ausführungsbeispiels zu entnehmen. Wie daraus ersichtlich ist, liegt hierbei die Lippe 32 zu Betätigungsbeginn an einem radialen Flansch-Abschnitt 35 an.

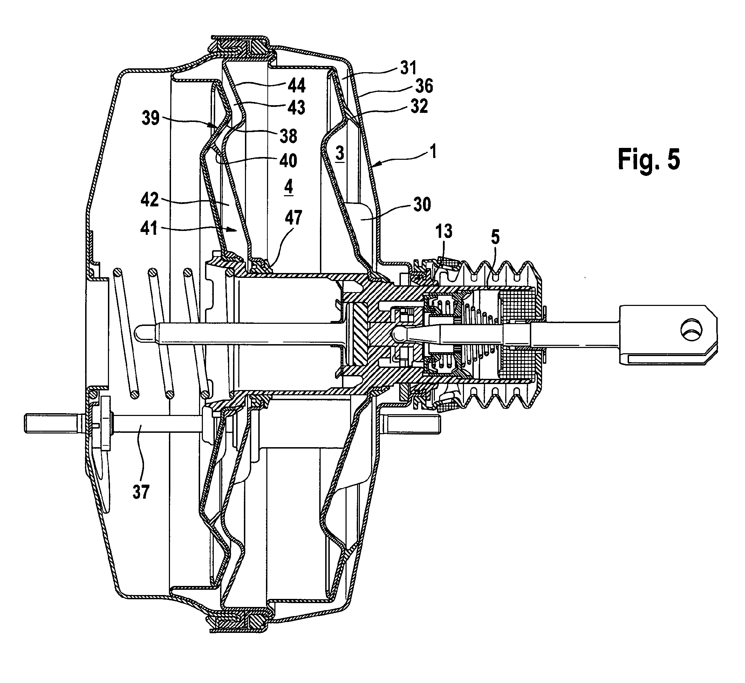

Fig. 5 zeigt das dritte Ausführungsbeispiel, bei welchem die Lippe 32 zu Betätigungsbeginn an einem schrägen Abschnitt 36 des Verstärkergehäuses 1 anliegt, so dass der Bremskraftverstärker mit einem so genannten Zuganker 37 versehen werden kann, welcher das Verstärkergehäuse 1 in Bereich des Flansch-Abschnittes 35 durchragt. Wie Fig. 5 zeigt, kann bei einem als Tandem-Gerät ausgeführten Bremskraftverstärker eine zweite Rollmembran 38 einer zweiten beweglichen Wand 39 ebenfalls eine umlaufende Lippe 40 aufweisen, welche eine zweite Arbeitskammer 41 durch Anlage an einem Zwischenboden 44 in eine Vorkammer 42 und eine Hauptkammer 43 unterteilt und damit die gleiche Funktion wie die Lippe 32 aufweist. Ein Dichtring 47 dichtet die zweite Arbeitskammer 41 gegen die erste Unterdruckkammer 4 ab.

Wie bereits oben erwähnt ist bei den vorstehend beschriebenen Ausführungsbeispielen die Lippe 32 bzw. auch die Lippe 40 definiert undicht vorgesehen, um eine komplette Rückstellung des Bremskraftverstärkers in eine Bereitschaftsstellung zu ermöglichen.

Hierzu kann die Lippe 32 bzw. 40 wenigstens eine nicht dargestellte Rippe bzw. eine nicht dargestellte Ausnehmung aufweisen, welche eine abdichtende Anlage der Lippe 32 bzw. 40 an dem Verstärkergehäuse 1 bzw. dem Zwischenboden 44 verhindert, wodurch eine definierte Undichtheit der Lippe 32 bzw. 40 gewährleistet ist. Hierdurch kann bei der Rückstellung des Bremskraftverstärkers die Luft wieder vollständig aus der bzw. den Arbeitskammern 3, 41 entweichen. Eine Änderung des Verstärkergehäuses 1 ist somit vorteilhafterweise nicht notwendig.

Alternativ kann im Anlagebereich der Lippe 32 bzw. 40 wenigstens ein Kanal im Verstärkergehäuse 1 bzw. im Zwischenboden 44 vorgesehen sein, welcher ebenfalls eine definierte Undichtheit gewährleistet.

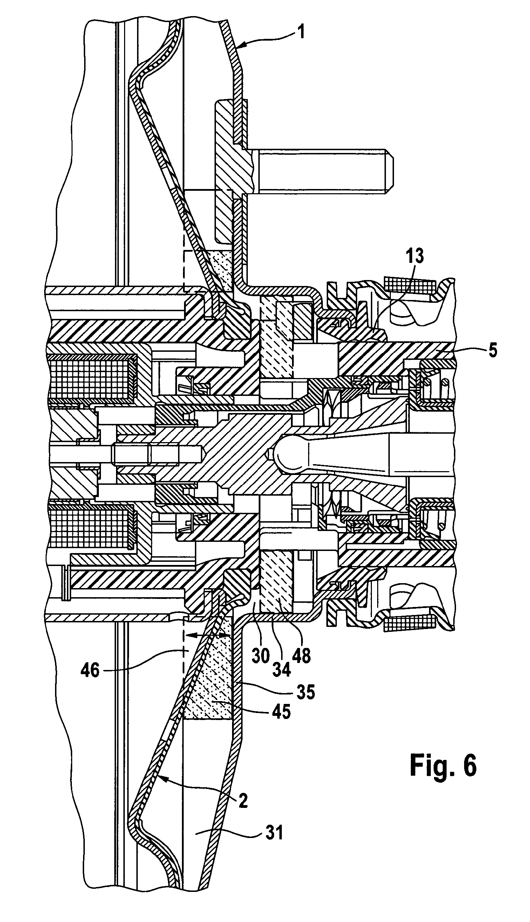

Fig. 6 zeigt ein viertes Ausführungsbeispiel eines nicht erfindungsgemäßen Bremskraftverstärkers. Als Mittel ist bei diesem Ausführungsbeispiel ein reversibel verformbares, umlaufendes Filterelement 45 vorgesehen, welches die Hauptkammer 31 gedrosselt belüftet. Wie aus Fig. 6 ersichtlich ist, ist das Filterelement 45, welches beispielsweise aus einer offen- oder geschlossenporiger Filtermatte vorgesehen ist, an dem Flansch-Abschnitt 35 des Verstärkergehäuses 1 vorgesehen, so dass die bewegliche Wand 2 in der gezeigten Bereitschaftsstellung des Bremskraftverstärkers das Filterelement 45 wie dargestellt verformt. Bei einer Betätigung des Bremskraftverstärkers fährt die bewegliche Wand in der Zeichnung nach links. Dabei kann sich das Filterelement 45 wieder in seine gestrichelt angedeutete Ausgangsform 46 ausdehnen, so dass die Arbeitskammer 3 wieder ungedrosselt belüftet werden kann.

Zur Gewährleistung der definierten Undichtheit des Filterelementes 45 kann dieses beispielsweise wenigstens einen nicht gezeigten Durchgangskanal aufweisen. Auch hier ist von Vorteil, dass keine Änderung des Verstärkergehäuses 1 notwendig ist.

Ist das Filterelement 45 gemäß eines nicht dargestellten Ausführungsbeispiels an der beweglichen Wand 2 befestigt, kann am Verstärkergehäuse 1 im Anlagebereich des Filterelementes 45 wenigstens ein Kanal vorgesehen sein, welcher die definierte Undichtheit gewährleistet.

Weiter ist in Fig. 6 ein fünftes Ausführungsbeispiel eines nicht erfindungsgemäßen Bremskraftverstärkers angedeutet. Wie ersichtlich ist, kann das erwähnte Filterelement 45 auch als reversibel verformbares, ringförmiges Filterelement 48 (gestrichelt angedeutet) im Bereich des axialen Abschnittes 34 des Verstärkergehäuses 1 vorgesehen sein, welches die Hauptkammer 31 gedrosselt belüftet. Es kann ebenso aus einer offen- oder geschlossenporiger Filtermatte vorgesehen sein. Bei einer Betätigung des Bremskraftverstärkers fährt das Steuergehäuse 5 in der Zeichnung nach links. Dabei gib das Filterelement 48 den kompletten Querschnitt frei, so dass die Arbeitskammer 3 wieder ungedrosselt belüftet werden kann. Zusätzlich dämpft das Filterelement 48 störende Geräusche, welche durch die Luftströmung im Steuergehäuse 5 verursacht werden.

Zur Gewährleistung der definierten Undichtheit des Filterelementes 48 kann auch dieses beispielsweise wenigstens einen nicht gezeigten Durchgangskanal aufweisen. Auch hier ist von Vorteil, dass keine Änderung des Verstärkergehäuses 1 notwendig ist.

Im Rahmen der Erfindung ist es somit grundsätzlich möglich, die beschriebenen Mittel sowohl am Verstärkergehäuse 1 als auch an der beweglichen Wand 2 vorzusehen. Ferner kann die definierte Undichtheit der Mittel durch geeignete Kanäle, Rippen oder Ausnehmungen sichergestellt werden.

### Bezugszeichenliste

- 1: Verstärkungsgehäuse
- 2: bewegliche Wand
- 3: Arbeitskammer
- 4: Unterdruckkammer
- 5: Steuergehäuse
- 6: Reaktionsscheibe
- 7: Eingangsglied
- 8: Membranteller
- 9: Ventilkolben
- 10: Ventilkörper
- 11: Querglied
- 12: Steuerventil
- 13: Dichtring
- 14: Druckstange
- 15: Dichtsitz
- 16: Dichtsitz
- 17: Raum
- 18: Rollmembran
- 19: Durchlass
- 20: Gehäuseöffnung
- 21: Führungsteil
- 22: Ventilfeder
- 23: Kopfflansch
- 24: Ringraum
- 25: Anschlag
- 26: Rückstellfeder
- 27: Rückholfeder
- 28: Kanal
- 29: Kanal
- 30: Vorkammer
- 31: Hauptkammer
- 32: Lippe
- 33: Dichtwulst
- 34: Abschnitt
- 35: Flansch-Abschnitt
- 36: Abschnitt
- 37: Zuganker
- 38: Rollmembran
- 39: Bewegliche Wand
- 40: Lippe
- 41: Arbeitskammer
- 42: Vorkammer
- 43: Hauptkammer
- 44: Zwischenboden
- 45: Filterelement
- 46: Ausgangsform
- 47: Dichtring
- 48: Filterelement

- L: Längsachse

## Patentansprüche

1. Pneumatischer Bremskraftverstärker für Kraftfahrzeug mit einem Verstärkergehäuse (1), dessen Innenraum durch wenigstens eine, mit einem pneumatischen Differenzdruck beaufschlagbare, axial bewegliche Wand (2,39) in wenigstens eine Arbeitskammer (3,41) und wenigstens eine Unterdruckkammer (4) unterteilt ist, mit einem, den Differenzdruck steuernden, in einem Steuergehäuse (5) angeordneten Steuerventil (12) zur Verbindung der Arbeitskammer (3,41) mit der Unterdruckkammer (4) oder der Atmosphäre, wobei die bewegliche Wand (2,39) einen Membranteller (8) und eine Rollmembran (18,38) umfasst und wobei die Arbeitskammer (3,41) mittels eines Dichtringes (13,47) abgedichtet ist, welcher an dem Steuergehäuse (5) anliegt und der in radialer Richtung bezogen auf eine Längsachse (L) des Bremskraftverstärkers eingespannt ist, wobei Mittel vorgesehen sind, um zu Beginn einer Betätigung des Bremskraftverstärkers eine wirksam beaufschlagte Fläche der beweglichen Wand (2,39) durch Unterteilung der Arbeitskammer (3,41) in eine Vorkammer (30,42) und eine Hauptkammer (31,43) zu verkleinern **dadurch gekennzeichnet, dass** als Mittel eine umlaufende Lippe (32,40) an der Rollmembran (18,38) oder dem Steuergehäuse (5) angeordnet ist, welche zu Beginn der Betätigung an dem Verstärkergehäuse (1) bzw. dem Zwischenboden (44) anliegt.

2. Pneumatischer Bremskraftverstärker nach Anspruch 1, **dadurch gekennzeichnet, dass** die Mittel definiert undicht vorgesehen sind.

3. Pneumatischer Bremskraftverstärker nach Anspruch 1 oder 2, **dadurch gekennzeichnet, dass** die Mittel die Hauptkammer (31,43) zu Beginn der Betätigung von der Vorkammer (30,42) durch Anlage an dem Verstärkergehäuse (1) bzw. einem Zwischenboden (44) definiert undicht abtrennen.

4. Pneumatischer Bremskraftverstärker nach Anspruch 1, **dadurch gekennzeichnet, dass** auf der umlaufenden Lippe (32,40) wenigstens eine Rippe vorgesehen ist, welche die definierte Undichtheit der Lippe (32,40) gewährleistet.

5. Pneumatischer Bremskraftverstärker nach Anspruch 1, **dadurch gekennzeichnet, dass** die umlaufende Lippe (32,40) wenigstens eine Ausnehmung aufweist, welche die definierte Undichtheit der Lippe (32,40) gewährleistet.

6. Pneumatischer Bremskraftverstärker nach einem der vorangegangenen Ansprüche 1-5, **dadurch gekennzeichnet, dass** im Anlagebereich des Mittels wenigstens ein Kanal vorgesehen ist, welcher die definierte Undichtheit des Mittels gewährleistet.

7. Pneumatischer Bremskraftverstärker nach einem der vorangegangenen Ansprüche 1-6, **dadurch gekennzeichnet, dass** die Mittel im Bereich eines axialen Abschnittes (34) des Verstärkergehäuses (1) angeordnet sind.

8. Pneumatischer Bremskraftverstärker nach einem der vorangegangenen Ansprüche 1 bis 6, **dadurch gekennzeichnet, dass** die Mittel im Bereich eines radialen Flansch-Abschnittes (35) des Verstärkergehäuses (1) angeordnet sind.

9. Pneumatischer Bremskraftverstärker nach einem der vorangegangenen Ansprüche 1 bis 6, **dadurch gekennzeichnet, dass** die Mittel im Bereich eines schrägen Abschnittes (36) des Verstärkergehäuses (1) angeordnet sind.

## Claims

1. Pneumatic brake servo for motor vehicles having a servo housing (1), the interior of which is divided into at least one working chamber (3, 41) and at least one vacuum chamber (4) by at least one axially movable wall (2, 39) which can be loaded with a pneumatic differential pressure, having a control valve (12) which controls the differential pressure and is arranged in a control housing (5) for connecting the working chamber (3, 41) to the vacuum chamber (4) or to atmosphere, the movable wall (2, 39) comprising a diaphragm plate (8) and a rolling diaphragm (18, 38), and the working chamber (3, 41) being sealed by means of a sealing ring (13, 47) which bears against the control housing (5) and which is clamped in the radial direction in relation to a longitudinal axis (L) of the brake servo, means being provided, in order, at the beginning of an actuation of the brake servo, to reduce an actively loaded area of the movable wall (2, 39) by division of the working chamber (3, 41) into a prechamber (30, 42) and a main chamber (31, 43) **characterized in that** a circumferential lip (32, 40) is arranged as means on the rolling diaphragm (18, 38) or the control housing (5), which circumferential lip (32, 40) bears against the servo housing (1) or the intermediate floor (44) at the beginning of actuation.

2. Pneumatic brake servo according to Claim 1, **characterized in that** the means are provided in a defined, leaky manner.

3. Pneumatic brake servo according to Claim 1 or 2, **characterized in that**, at the beginning of the actuation, the means separate the main chamber (31, 43) from the prechamber (30, 42) in a defined, leaky manner by bearing against the servo housing (1) or an intermediate floor (44).

4. Pneumatic brake servo according to Claim 1, **characterized in that** at least one rib is provided on the circumferential lip (32, 40), which rib ensures the defined leakiness of the lip (32, 40).

5. Pneumatic brake servo according to Claim 1, **characterized in that** the circumferential lip (32, 40) has at least one recess which ensures the defined leakiness of the lip (32, 40).

6. Pneumatic brake servo according to one of the preceding Claims 1 to 5, **characterized in that** at least one channel is provided in the bearing region of the means, which channel ensures the defined leakiness of the means.

7. Pneumatic brake servo according to one of the preceding Claims 1 to 6, **characterized in that** the means are arranged in the region of an axial section (34) of the servo housing (1).

8. Pneumatic brake servo according to one of the preceding Claims 1 to 6, **characterized in that** the means are arranged in the region of a radial flange section (35) of the servo housing (1).

9. Pneumatic brake servo according to one of the preceding Claims 1 to 6, **characterized in that** the means are arranged in the region of an oblique section (36) of the servo housing (1).

## Revendications

1. Servofrein pneumatique pour véhicule automobile avec un boîtier de servofrein (1), dont l'espace intérieur est divisé par une paroi mobile axialement (2, 39) pouvant être soumise à une différence de pression pneumatique, en au moins une chambre de travail (3, 41) et au moins une chambre de dépression (4), avec une soupape de commande (12) disposée dans un boîtier de commande (5) et commandant la différence de pression pour la communication de la chambre de travail (3, 41) avec la chambre de dépression (4) ou l'atmosphère, dans lequel la paroi mobile (2, 39) comprend un disque de diaphragme (8) et une membrane enroulée (18, 38) et dans lequel la chambre de travail (3, 41) est rendue étanche au moyen d'un joint annulaire (13, 47), qui est appliqué sur le boîtier de commande (5) et qui est serré en direction radiale par rapport à un axe longitudinal (L) du servofrein, dans lequel il est prévu des moyens pour réduire, au début d'un actionnement du servofrein, une face effectivement chargée de la paroi mobile (2, 39) par division de la chambre de travail (3, 41) en une préchambre (30, 42) et une chambre principale (31, 43), **caractérisé en ce qu'**en guise de moyens une lèvre périphérique (32, 40) est disposée sur la membrane enroulée (18, 38) ou sur le boîtier de commande (5), qui s'applique au début de l'actionnement sur le boîtier de servofrein (1) ou sur le fond intermédiaire (44).

2. Servofrein pneumatique selon la revendication 1, **caractérisé en ce que** les moyens sont prévus de façon définie non étanche.

3. Servofrein pneumatique selon la revendication 1 ou 2, **caractérisé en ce qu'**au début de l'actionnement les moyens séparent la chambre principale (31, 43) de la préchambre de façon définie non étanche par appui sur le boîtier de servofrein (1) ou sur un fond intermédiaire (44).

4. Servofrein pneumatique selon la revendication 1, **caractérisé en ce qu'**il est prévu sur la lèvre périphérique (32, 40) au moins une nervure, qui garantit un manque d'étanchéité défini de la lèvre (32, 40).

5. Servofrein pneumatique selon la revendication 1, **caractérisé en ce que** la lèvre périphérique (32, 40) présente au moins un évidement, qui garantit le manque d'étanchéité défini de la lèvre (32, 40).

6. Servofrein pneumatique selon l'une quelconque des revendications précédentes 1 à 5, **caractérisé en ce qu'**il est prévu dans la région d'appui du moyen, au moins un canal qui définit le manque d'étanchéité défini du moyen.

7. Servofrein pneumatique selon l'une quelconque des revendications précédentes 1 à 6, **caractérisé en ce que** les moyens sont disposés dans la région d'une partie axiale (34) du boîtier de servofrein (1).

8. Servofrein pneumatique selon l'une quelconque des revendications précédentes 1 à 6, **caractérisé en ce que** les moyens sont disposés dans la région d'une partie de bride radiale (35) du boîtier de servofrein (1).

9. Servofrein pneumatique selon l'une quelconque des revendications précédentes 1 à 6, **caractérisé en ce que** les moyens sont disposés dans la région d'une partie oblique (36) du boîtier de servofrein (1).
